# EUROPÄISCHE PATENTANMELDUNG

(11) **EP 1 503 198 A1**
(43) Veröffentlichungstag der Anmeldung: **02.02.2005**
(21) Anmeldenummer: 04014550.0
(22) Anmeldetag: 22.06.2004
(51) Int. Cl.: G01L 19/14, H05K 5/02

(54) **Aktiver Sensorkanal**

(30) Priorität: 28.07.2003 DE 10334237
(71) Anmelder: ROBERT BOSCH GMBH, 70442 Stuttgart (DE)
(72) Erfinder: Wellhoefer, Matthias, 71701 Schwieberdingen (DE)

(57) **Zusammenfassung**

Durch die vorgeschlagene Erfindung kann erreicht werden, dass Partikel, die in die Kammer des mikromechanischen Sensors eingedrungen sind, durch die Schwingungen des variablen Bereichs sowohl aus der Kammer, als auch aus dem Zugang entfernt werden. So kann sich beispielsweise Kondenswasser, welches entlang des Kanals bei entsprechender Stellung des Sensors bzw. bei entsprechender Geometrie des Kanals herausfliesen kann, am Ende des Kanals als Tropfen festsetzen. Wird nun dieses Ende des Kanals in Schwingungen versetzt, so werden die am Sensoreinlasskanal hängenden Flüssigkeitstropfen mechanisch abgeschüttelt. Diese mechanische Bewegung kann durch die erfindungsgemäße Ausgestaltung eines Teils des Kanals als aktiver Abschlussrüssel des Sensorzugangskanal erreicht werden. Als Erweiterung kann eine Anregung durch eine Anregungseinheit vorgesehen sein, die bspw. mittels eines Piezoelementes und/oder einer Ultraschallerzeugungseinheit die Feuchtigkeit, die sich am Rand des variablen Bereichs angesammelt hat, als fein verteilter Feuchtigkeitsnebel "wegnebelt".

## Beschreibung

### Stand der Technik

Die Erfindung geht aus von einem mikromechanischen Sensor bzw. von einem Verfahren zur Herstellung eines mikromechanischen Sensors zur Erfassung einer Zustandsgröße einer Substanz.

In der DE 199 29 025 A1 wird ein Drucksensor beschrieben, der zwei Kammern zur Druckmessung aufweist. Die Druckmessung erfolgt dabei über piezoresistive Elemente auf der Membran, die die beiden Kammern voneinander trennt. Einer der Kammern ist derart aufgebildet, dass er einen Referenzraum definiert, wohingegen die Druckzuführung aus der Umgebung des Drucksensors in die zweite Kammer durch einen Druckkanal erfolgt. Der Druckkanal wird dabei in einem Ausführungsbeispiel durch eine Öffnung und einen Durchlass in der Kappenoberseite realisiert.

Wie die DE 100 57 258 C1 zeigt, ist jedoch auch bei Temperatursensoren eine derartige Ausgestaltung des Sensors vorgesehen. So wird in der DE 100 57 258 C1 der Temperatursensor in einem Gehäuse untergebracht, wobei der Gehäusedeckel eine Öffnung aufweist, durch die eine Druckänderung mit der Umgebungsluft übertragen wird.

Vorteile der Erfindung

In den aufgezeigten Patentschriften wird jedoch nicht die Problematik des Verstopfens der Zugangsöffnungen in eine an die Membran anschließende Messkammer erwähnt. Beim ständigen Austausch der zu erfassenden Substanz von der Umgebung in die Messkammer gelangen sowohl Schmutzteilchen als auch Kondenswasser in die Messkammer. Im ungünstigsten Fall verbleiben die Schmutzteilchen in der Kammer und setzten sich an den Wänden der Messkammer oder auf den Sensorelementen ab. Bei einer Ablagerung an den Wänden der Zugangsöffnungen kann es dazu kommen, dass ein Austausch der Substanz in der Messkammer mit der Umgebung nur eingeschränkt erfolgen, was zu einer verminderten Messgenauigkeit bzw. -ansprechgeschwindigkeit führt. Weiterhin besteht für gasförmige Substanz die Möglichkeit, dass sich im Laufe der aufeinander folgenden Messzyklen Kondenswasser in der Messkammer ausbildet. Je nach Ausgestaltung des Sensors kann dabei ein Abfließen des Kondenswasser dadurch erleichtert werden, dass die Öffnung zur Messkammer hin nach unten zeigt. Darüber hinaus können spezielle Geometrien der Öffnungen bzw. der Sensoreinlasskanäle verwendet werden, die die Ablagerung von Schmutzteilchen und/oder Kondenswasser minimieren.

Mit der vorliegenden Erfindung wird ein mikromechanischer Sensor bzw. ein Verfahren zur Herstellung eines mikromechanischen Sensors beschrieben, der wenigstens eine Zustandsgröße einer Substanz erfasst. Dabei ist vorgesehen, dass der Sensor wenigstens eine Kammer zur Aufnahme der Substanz aufweist, sowie einen Zugang, durch den Austausch des Substanz in der Kammer mit der Umgebung ermöglicht wird. Der Kern der Erfindung besteht darin, dass der wenigstens eine Zugang zur Kammer einen starren und einen variablen Bereich aufweist, wobei der variable Bereich derart gestaltet ist, dass er den Austritt von Schmutzteilchen und/oder von Kondenswasser aus dem Sensor erleichtert. Dabei soll der variable Bereich derart gestaltet sein, dass er flexibel und/oder elastisch gegenüber Anregungen reagieren kann.

Vorteilhafterweise ist der Zugang derart ausgestaltet, dass die Substanz von der Umgebung des Sensors mittels eines Kanals in die Kammer gelangt. Ist nur ein Zugang vom der Umgebung in die Kammer vorgesehen, so erfolgt sowohl der Eintritt der Substanz in die Kammer als auch der Austritt der Substanz aus der Kammer durch den gleichen Kanal. In einem weiteren Ausführungsbeispiel kann jedoch vorgesehen sein, dass wenigstens ein Zugangskanal als auch ein Ausgangskanal den Austausch der Substanz in der Kammer mit der Umgebung ermöglicht. Weiterhin ist vorgesehen, dass der variablen Bereich auf der der Kammer abgewandte Seite des Kanals angebracht ist. Vorteilhafterweise schließt der variablen Bereich den Kanal im Außenbereich ab. In einer Weiterbildung der Erfindung weist der variable Bereich ein flexibles Röhrchen, einen elastischen Rüssel und/oder einen elastischen Federbalg als aktiven Sensorzugangskanal bzw. Sensoreinlass- oder Sensorausgangskanal auf. Vorzugsweise ist dabei vorgesehen, dass der variable Bereich derart gestaltet ist, dass er zu Schwingungen angeregt werden kann. Dies kann beispielsweise dadurch geschehen, dass der variable Bereich aus Gummi oder einem anderen elastischen Material gefertigt ist.

Erfindungsgemäß ist vorgesehen, dass die Schwingungen des variablen Bereichs durch eine Anregungseinheit hervorgerufen werden, die direkt am variablen Bereich bzw. in unmittelbarer Nähe des variablen Bereichs angebracht ist. Darüber hinaus ist jedoch auch denkbar, dass die Schwingungen aufgrund eines Beharrungsvermögens des variablen Bereichs bei Bewegung des Sensors erzeugt werden. Als Anregungseinheit kann beispielsweise ein Piezoelement oder ein Ultraschallerzeuger vorgesehen sein.

In einer weiteren Ausgestaltung der Erfindung besteht der Sensor wenigstens teilweise aus einem Halbleiterbauelement wobei vorzugsweise die Membran aus einem Halbleiterelement wie Silizium hergestellt wird. Darüber hinaus ist vorgesehen, dass der Sensor wenigstens zwei Kammern aufweist, wobei wenigstens der Kammerinhalt einer Kammer mit der Umgebung ausgetauscht werden kann, so dass die andere Kammer als Referenzkammer vorgesehen sein kann. Vorteilhafterweise können in den beiden Kammern unterschiedliche Substanzen vorliegen. Beispielsweise ist denkbar, dass die Referenzkammer mit einem Vakuum versehene ist, wohingegen die andere Kammer als Messkammer dient und die Substanz enthält, deren Zustandsgröße erfasst werden soll.

Die Erfassung der Zustandsgröße erfolgt vorzugsweise durch ein Sensorelement. Dabei kann das Sensorelement sowohl in der Kammer als auch in räumlicher Nähe der Kammer angebracht sein. Denkbar ist hierbei, dass das Sensorelement an einer die Kammer einschließenden Wand angebracht ist.

Als Zustandsgröße, die mit dem beschriebenen mikromechanischen Sensor erfasst werden kann, ist vorteilhafterweise ein Druck, eine Temperatur, eine Luftmasse, eine Dichte und/oder eine Konzentration vorgegebene Bestandteile des Substanz vorgesehen. Darüber hinaus kann in dem mikromechanischen Sensor als Substanz eine Flüssigkeit, ein Gas und/oder ein Gasgemisch in der Kammer aufgenommen werden.

Eine bevorzugte Weiterbildung der Erfindung besteht darin, dass ein mikromechanischer Sensor der beschriebenen Art in einer Vorrichtung untergebracht ist, wobei der variable Bereich des Zugangs in Abhängigkeit vom Betrieb der Vorrichtung in Schwingungen versetzt wird. In einer weiteren Ausgestaltung der Erfindung wird der variable Bereich zu vorgebbaren Zeiten in Schwingungen versetzt.

Beispielsweise kann der mikromechanischer Sensor in ein Fahrzeug eingebaut werden, sodass der variable Bereich bei einem Start des Fahrzeugmotors in Schwingungen versetzt wird. Weiterhin kann vorgesehen sein, dass der variable Bereich bei bestimmten Betriebssituationen des Fahrzeugs zu Schwingungen angeregt wird, ansonsten jedoch schwingungsfrei bleibt. Dies kann beispielsweise während einer geradlinigen Fahrt geschehen, bei der keine Bremstätigkeit auftritt.

Durch die vorgeschlagene Erfindung kann erreicht werden, dass Partikel, die in die Kammer des mikromechanischen Sensors eingedrungen sind, durch die Schwingungen des variablen Bereichs sowohl aus der Kammer, als auch aus dem Zugang entfernt werden. So kann sich beispielsweise Kondenswasser, welches entlang des Kanals bei entsprechender Stellung des Sensors bzw. bei entsprechender Geometrie des Kanals herausfliesen kann, am Ende des Kanals als Tropfen festsetzen. Wird nun dieses Ende des Kanals in Schwingungen versetzt, so werden die am Sensoreinlasskanal hängenden Flüssigkeitstropfen mechanisch abgeschüttelt. Diese mechanische Bewegung kann durch die erfindungsgemäße Ausgestaltung eines Teils des Kanals als aktiver Abschlussrüssel des Sensorzugangskanal erreicht werden. Als Erweiterung kann eine Anregung durch eine Anregungseinheit vorgesehen sein, die bspw. mittels eines Piezoelementes und/oder einer Ultraschallerzeugungseinheit die Feuchtigkeit, die sich am Rand des variablen Bereichs angesammelt hat, als fein verteilter Feuchtigkeitsnebel "wegnebelt".

Weitere Vorteile ergeben sich aus der nachfolgenden Beschreibung von Ausführungsbeispielen bzw. aus den abhängigen Patentansprüchen.

### Zeichnungen

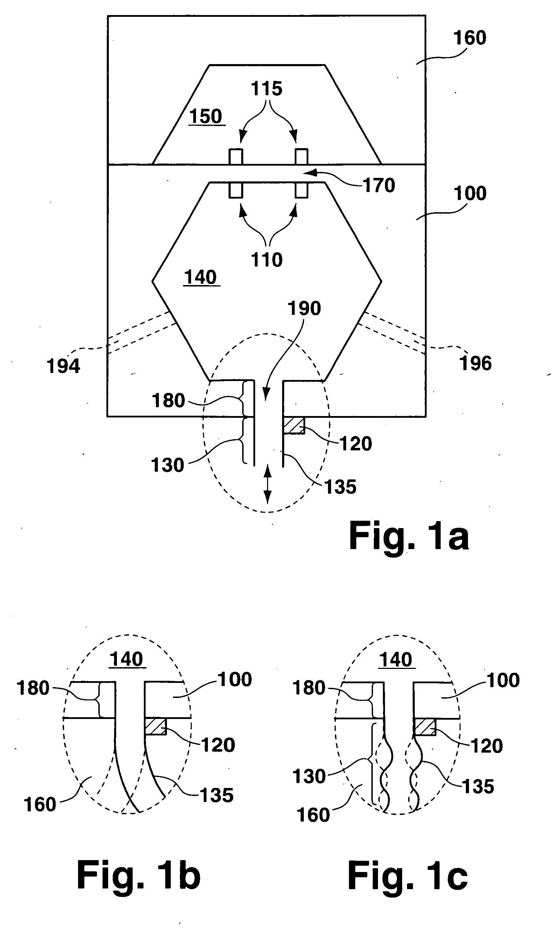

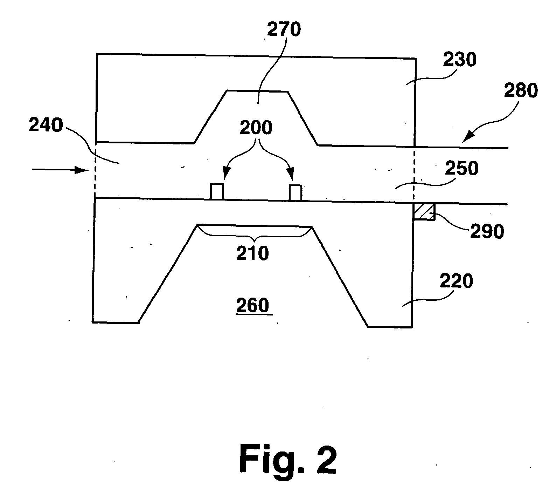

Figur 1 zeigt schematisch einen Sensor, der erfindungsgemäß mit einem variablen Bereich des Zugangs in die Messkammer ausgestattet ist. In Figur 2 ist eine spezielle Ausgestaltungen der Erfindung anhand eines Massenflusssensors bzw. Temperatursensors aufgeführt.

### Ausführungsbeispiel

Gängige mikromechanische Sensoren werden häufig in nahezu geschlossenen Gehäusen untergebracht, beispielsweise um die Sensibilität der Sensorelemente zu erhöhen. Da bei diesen Sensoren jedoch wie etwa bei einem Drucksensor eine direkte Verbindung zum Außenraum zur Erfassung der Zustandsgrößen der überwachten Substanz notwendig ist, kann es zu Problemen der Messwertaufnahme kommen, wenn unerwünschte Fremdstoffe in das Gehäuse eindringen. So können sich beispielsweise Schmutz, Staub, Wasser oder auch andere Partikel auf dem Sensorelement des Sensors absetzten und die Funktionstüchtigkeit des Sensors einschränken. Dies kann sogar soweit gehen, dass der Sensor falsche oder gar keine Messwerte mehr liefert. Eine Möglichkeit, diese Beeinträchtigung der Messwerterfassung zu minimieren, besteht darin, die Geometrie der Sensoreinlasskanäle entsprechend zu gestalten, so dass ein Eindringen von Fremdstoffen erschwert wird oder ein Abführen der Fremdstoffe erleichtert wird. Neben der Verschmutzung der Sensorelemente selbst, kann es auch zu Ablagerungen an den Sensoreinlasskanälen kommen. Eine derartige Ablagerung würde unter Umständen nach sich ziehen, dass der Einlass der Substanz in die Messkammer behindert wird. In einem Extremfall ist sogar eine komplette Verstopfung des Sensoreinlasskanals möglich, was einem Totalausfall des Sensors gleich kommt.

Speziell durch Kondenswasser kann es zu einer Beeinträchtigung der Sensorperformance kommen. So kann das Kondenswasser beispielsweise bei sehr dünnen Einlasskanälen in Drucksensoren wegen der Kapillarwirkung nur sehr schwer entweichen.

Bei gängigen Drucksensoren zur Erfassung eines Crashs wurde zwar das Design des Sensoreinlasskanals darauf optimiert, dass Flüssigkeit aus dem Kanal abfließen kann, jedoch bleibt an deren Ende immer ein Tropfen hängen. Selbst bei Reduktion der Oberflächenspannung z.B. durch eine Seifenlösung oder eine spezielle Beschichtung bleibt ein gewisser Rest an Flüssigkeit bestehen.

Besitzt die Sensorauslassöffnung bzw. der Sensoreinlasskanal einen Mindestdurchmesser, so kann verhindert werden, dass ein Tropfen aufgrund der Kapillarwirkung oder Adhäsion komplett festgehalten wird. Wenn die Öffnung des speziellen Einlasskanals nach unten gerichtet ist, kann somit bei genügend großem Kanaldurchmesser oder Querschnitt das Wasser tropfenweise aus dem Kanal entweichen. Dabei können die Wassertropfen abgesetzt Partikel mit entfernen. Trotz dieser speziellen Sensoranordnung bleibt jedoch das Problem, dass am Ende des Kanals ein Tropfen hängen bleibt.

Im nachfolgenden soll die Wirkungsweise der Erfindung durch einen aktiven Sensoreingangskanal bzw. aktiven Abschlussrüssel beispielhaft an einem Drucksensor gemäß Figur 1 dargestellt werden. Bei dem Drucksensor in Figur 1 handelt es sich um einen Drucksensor, der mittels piezoresistiver Widerstände 110 bzw. 115 einen Druck beispielsweise der Luft in der Kammer 140 erfasst. Dabei kann der Drucksensor derart ausgestaltet sein, dass der Druck in der Kammer 140 gegenüber einem Referenzdruck in der Referenzkammer 150 oder gegenüber dem Umgebungsdruck 160 erfasst wird. Neben der Druckerfassung von Luft ist darüber hinaus jedoch auch die Druckerfassung eines anderen Gases oder einer Flüssigkeit denkbar. Die Druckerfassung findet durch eine Verbiegung der Membran 170 statt, die in einem Element 100 eingebettet ist. Die Verbiegung der Membran 170 erzeugt in den piezoresisitven Widerständen eine Größe, die den Druckunterschied zwischen der Kammer 140 und der Kammer 150 bzw. dem Umgebungsdruck 160 repräsentiert. Dabei können die piezoresistiven Widerstände innerhalb der Kammer 140 auf der Membran 170 oder auch außerhalb der Kammer 140 auf der Membran 170 aufgebracht sein. Da sich die Membran 170 in Abhängigkeit vom Druckunterschied zwischen der Kammer 140 und dem Umgebungsdruck 160 bzw. dem Referenzdruck in der Kammer 150 ändert, sind beide Stellen für die Messwertaufnahme geeignet. Neben voneinander abgrenzbaren Widerstandsstrukturen 110 bzw. 115 auf der Membran 170 können jedoch auch Widerstandsschichten vorgesehen sein, die über einen Großteil der Membran 170 angeordnet sind und ebenfalls eine Messwertgröße aufgrund der Verformung ergeben.

Die Membran 170 kann dabei aus dem gleichen Material wie das Element 100 bestehen, wobei vorzugsweise das Element 100 selbst aus mehreren Bauelementen besteht, wie es beispielsweise die DE 199 29 025 A1 zeigt. Eine genaue Herstellung eines derartigen Drucksensors soll an dieser Stelle nicht beschrieben werden, da derartige Herstellungsprozesse bereits zum Stand der Technik gehören und beispielsweise in den eingangs erwähnten Schriften nachgelesen werden können. Es sei jedoch darauf hingewiesen, dass der Drucksensor sowohl mit einer oder auch mit zwei Kammern ausgestattet sein kann. Ohne die Erfindung zu beschränken soll im vorliegenden Ausführungsbeispiel jedoch ein Drucksensor beschrieben sein, der mit zwei Kammern 140 und 150 ausgestattet ist. Dabei kann auf das Element 100 ein weiteres vorzugsweise mikromechanisches Bauelement 160 aufgebracht sein, das beispielsweise im Zusammenspiel mit dem Element 100 eine Kammer 150 definiert. In einem besonderen Ausführungsbeispiel ist diese Kammer 150 gegenüber der Umgebung abgeschottet, so dass in der Kammer 150 ein Referenzdruck pₒ herrscht, der während des Betriebs des Sensors konstant bleibt. Bei den gängigen Drucksensoren dieser Bauart wird hierbei vorzugsweise als Referenzdruck p₀ ein Vakuum verwendet.

In der Figur 1 ist mit dem Zugang 190 ein Kanal eingezeichnet, der einen Austausch der Luft in der Kammer 140 beispielsweise mit der Umgebung 160 ermöglicht. Alternativ hierzu können jedoch auch spezielle Einlasskanäle 194 und spezielle Auslasskanäle 196 vorgesehen sein, die in der Figur 1 jedoch nur durch Strichlinien angedeutet werden sollen. Auch an diesen Kanälen 194 und 196 können entsprechende variable Bereiche 130 angebracht sein wie am Zugang 190.

Der Zugang 190 lässt sich in zwei Bereiche aufteilen, wobei ein erster Bereich 180 relativ starr und ein zweiter Bereich 130 variabel gestaltet ist. Dabei ist vorzugsweise vorgesehen, dass der erste Bereich 180 durch das Element 100 führt, welches seinerseits sehr starr und fest gebaut ist, um beispielsweise eine minimale Bruchfestigkeit bei den auftretenden und zu erfassenden Drücken in der Kammer 140 gegenüber der Umgebung 160 zu erzeugen. Der zweite Bereich 130 dagegen wird durch ein flexibles, elastisches Rohr realisiert, welches wahlweise vor, während oder nach der Erzeugung des Elements 100 bzw. des Ätzens der Kammer 140 oder der Membran 170 an den ersten Bereich 180 angebracht werden kann. Dabei kann der zweite Bereich 130 aus einem gummiartigen oder einem ähnlich flexiblen Material bestehen und als elastisches Rohr bzw. elastischer Rüssel 135 ausgestaltet sein. Optional befindet sich in der Nähe des elastischen, flexiblen Rüssels 135 eine Anregungseinheit 120, die vorzugsweise in direkten Kontakt zum elastischen Rüssel 135 angebracht ist, wie es beispielhaft in der Figur 1a-c zu sehen ist.

Wird der Sensor nun zur Erfassung eines Gasdrucks betrieben, beispielsweise eines Luftdrucks, so kann es vorkommen, dass sich Kondenswasser innerhalb der Kammer 140 niederschlägt. Darüber hinaus ist auch denkbar, dass Schmutzpartikel durch den Zugang 190 in die Kammer gelangen und sich an den Wänden, auf der Membran 170 und den Sensorelementen 110 ablagern. Dies kann im schlimmsten Fall dazu führen, dass die Sensorelemente 110 eine falsche Größe für den Druck innerhalb der Kammer 140 erzeugen oder sogar unbrauchbar werden. Um dies zu verhindern ist dafür zu sorgen, dass die Schmutzpartikel und/oder das Kondenswasser in der Kammer 140 minimiert werden. Eine Möglichkeit besteht darin, den Zugang 190 derart zu gestalten, dass die Fremdstoffe auf ihrem Weg in die Kammer 140 behindert werden. Dies kann beispielsweise dadurch erreicht werden, dass der Zugang in die Kammer über Ecken oder Spiralen führt.

Ein anderer Weg wird in der vorliegenden Erfindung beschritten. Die Erfindung geht davon aus, dass bereits Schmutzpartikel und Kondenswasser in die Kammer gelangt sind. Durch eine geeignete Positionierung des Sensors und damit des Zugangs 190, wie er in Figur 1a dargestellt ist, können Wassertropfen, die sich beispielsweise an der Wand gebildet haben, nach unten aus der Kammer 140 ausfließen. Auf Ihrem Weg können sie dann Schmutzpartikel mitnehmen und aus der Kammer 140 befördern. Dem Abfluss des Kondenswassers sind jedoch physikalische Grenzen gesetzt, insbesondere wenn es sich bei dem Zugang 190 um einen sehr dünnen Kanal handelt. Meistens bleibt am Ende des Kanals (in Figur 1a am unteren Ende des zweiten Bereichs 130) ein Tropfen hängen. Durch eine Ausgestaltung des zweiten Bereichs 130 mit Hilfe eines elastischen Rüssels 135 kann bei einer entsprechenden Anregung der Rüssel 135 zu Schwingungen angeregt werden. Durch diese Schwingungen kann, wie es beispielsweise in Figur 1b und 1c gezeigt wird, der letzte noch am Rüssel 135 bzw. Sensoreinlasskanal hängende Flüssigkeitstropfen mechanisch abgeschüttelt werden. Auch können sich durch diese Schwingungen eventuelle Schmutzpartikel, die sich an der Kanalwand festgesetzt haben, lösen und nach außen transportiert werden.

Die Schwingungen des Rüssels können auf verschiedene Arten erzeugt werden. So ist denkbar, dass schon allein die Bewegung des Fahrzeugs, in dem ein erfindungsgemäßer Sensor eingebaut ist, zu Vibrationen führen, die ausreichen, den Rüssel im zweiten Bereich 130 des Kanals 190 zu Schwingungen anzuregen. Daneben ist jedoch auch denkbar, dass der Sensor schwingungsarm im Fahrzeug befestigt ist und der Rüssel 135 durch eine separate Anregungsvorrichtung 120 zu vorgegebenen Zeitpunkten zu Schwingungen angeregt werden kann. Denkbar ist beispielsweise, dass gerade beim Start des Fahrzeugs die Feuchtigkeit, die sich während des Stillstands angesammelt hat, durch die Schwingungen entfernt werden kann. Darüber hinaus ist jedoch auch vorstellbar, dass der Rüssel 135 zu regelmäßigen Zeitpunkten geschüttelt bzw. zu Schwingungen angeregt wird, um sicherzustellen, dass keine Verstopfung des Zugangs auftritt. Denkbar ist hierbei eine Fahrsituation, in der keine Messwertaufnahme durch den Sensor erfolgt.

Eine separate Anregungsvorrichtung 120, die den obigen Zweck erfüllt, ist beispielhaft in den Figuren 1a-c in unmittelbarer Nähe des elastischen Rüssels 135 angebracht. Es ist jedoch auch denkbar, dass es sich bei der separaten Anregungsvorrichtung 120 um eine Vorrichtung handelt, die den gesamten Sensor in Schwingungen versetzt. Auch ist denkbar, den elastischen Rüssel 135 durch die Anregungseinheit berührungslos in Schwingungen zu versetzten. Bei der Anregungseinheit 120 kann es sich beispielsweise um ein Piezoelement handeln, das den Rüssel 135 zu mechanischen Schwingungen anregen kann. Durch eine derartige Anregungseinheit 120 ist auch eine Anpassung der Rüttelfrequenz an die Länge des Rüssels 135 möglich, so das unterschiedliche Schwingungsbewegungen (siehe Figur 1b und 1c) realisiert werden können. In einem weiteren Ausführungsbeispiel kann die Anregungseinheit 120 durch einen Ultraschall-Wasservernebler realisiert werden, der mit höheren Frequenzen den Rüssel 120 anregt und dadurch das Wasser quasi "vernebelt".

Mit Figur 2 soll beispielhaft anhand eines Querschnitts durch einen Luftmassensensor bzw. einen Sensor zur Erfassung einer Temperatur dargestellt werden, dass die vorliegende Erfindung auch bei anderen Sensortypen zum Einsatz kommen kann. So ist in Figur 2 ein typischer Luftmassensensor dargestellt, der ein Trägerelement 220, eine Membran 210 sowie Heizund/oder Temperaturelemente 200 aufweist. Wie im Stand der Technik nachzulesen ist, wird typischerweise die Membran 210 mittels eines Ätzprozesses von unten aus dem Material des Trägerelements 220 herausgeätzt, so dass sich eine Kaverne 260 ausbildet. Wird nun ein weiteres Bauelement 230, vorzugsweise ein mikromechanisches Bauelement aus einem Halbleitermaterial, auf die Oberseite des Luftmassensensors aufgebracht, so kann durch eine geeignete Wahl des Einlasskanals 240 und des Auslasskanals 250 eine Luftströmung (verdeutlicht durch den Pfeil in Figur 2) an den Sensorelementen 200 entlang geführt werden. Mit der Zugangsöffnung 240 und der Ausgangsöffnung 250 sowie dem freien Bereich oberhalb der Sensorelemente 200 wird eine Kammer 270 definiert, die in einem besonderen Ausführungsbeispiel sogar noch in das Bauelement 230 vergrößert werden kann.

Wie schon in Figur 1a gezeigt wurde, kann am Ausgangskanal 250 ein flexibles Rohr bzw. ein flexibler Rüssel 280 angebracht werden, der beispielsweise durch eine Anregungseinheit 290 zu Schwingungen angeregt werden kann. Dabei kann der Luftmassensensor sowohl in der dargestellten waagerechten Position als auch in einer senkrechten Position betrieben werden. Eine mögliche Anordnung des Luftmassensensors ist dabei eine zur Figur 2 um 90° gedrehte Stellung, so dass die Luftströmung von oben in den Luftmassensensor eintreten und unten an dem Rüssel 280 wieder herausströmen kann.

Mit diesem neuartigen in der vorliegenden Erfindung beschriebenen aktiven Auslaufrüssel in Kombination mit einem entsprechenden optimierten inneren Design des Sensorkanals wird eine Performance-Einbuße durch Feuchtigkeit und Wassertropfen am Sensoreinlass weitestgehend vermieden.

## Patentansprüche

1. Mikromechanischer Sensor zur Erfassung wenigstens einer Zustandsgröße einer Substanz,
wobei der Sensor wenigstens
- eine Kammer (140) zur Aufnahme der Substanz und
- einen Zugang (190), durch den ein Austausch der Substanz in der Kammer (140) ermöglicht wird,
aufweist,
**dadurch gekennzeichnet, dass** der wenigstens eine Zugang (140) einen starren (180) und einen variablen (130) Bereich aufweist.

2. Mikromechanischer Sensor nach Anspruch 1, **dadurch gekennzeichnet, dass**
- der Zugang (190) als Kanal von einem Außenbereich (160) des Sensors in die Kammer (140) ausgestaltet ist und
- der variable Bereich (130)
- auf der der Kammer (140) abgewandten Seite des Kanals angebracht ist, und/oder
- ein flexibles Röhrchen aufweist und/oder
- einen elastischen Rüssel (135) umfasst und/oder
- einen elastischen Federbalg aufweist und/oder
- schwingungsfähig ist.

3. Mikromechanischer Sensor nach Anspruch 2, **dadurch gekennzeichnet, dass** die Schwingungen durch
- eine Anregungseinheit (120) und/oder
- eine Bewegung des Sensors
erzeugt werden,
wobei insbesondere vorgesehen ist, dass die Anregungseinheit (120)
- ein Piezoelement oder
- einen Ultraschallerzeuger
umfasst.

4. Mikromechanischer Sensor nach Anspruch 1, **dadurch gekennzeichnet, dass** der Sensor wenigstens
- teilweise ein Halbleiterbauelement aufweist,
und/oder
- zwei Kammern aufweist,
wobei der Kammerinhalt wenigstens einer Kammer (140) ausgetauscht werden kann,
wobei insbesondere vorgesehen ist, dass
- eine der Kammern eine erste Substanz und
- die zweite Kammer eine zweite Substanz
aufweist,
und/oder
- ein Sensorelement (110, 115) zur Erfassung der Zustandsgröße aufweist,
wobei vorgesehen ist, dass das wenigstens eine Sensorelement (110, 115) die Zustandsgröße der Substanz in der Kammer (140) erfasst,
wobei insbesondere vorgesehen ist, dass das wenigstens eine Sensorelement (110), 115) in der räumlichen Nähe der die Kammer (140) umgebenden Wand angebracht ist.

5. Mikromechanischer Sensor nach Anspruch 1, **dadurch gekennzeichnet, dass**
- als Zustandsgröße
- ein Druck,
- eine Temperatur,
- eine Luftmasse,
- eine Dichte und/oder
- eine Konzentration vorgegebener Bestandteile der Substanz erfasst wird und/oder
- als Substanz
- eine Flüssigkeit,
- ein Gas und/oder
- ein Gasgemisch
vorgesehen ist.

6. Vorrichtung, insbesondere ein Fahrzeug, mit einem mikromechanischen Sensor nach einem der Ansprüche 1 bis 5, **dadurch gekennzeichnet, dass** der variable Bereich (130) des Zugangs (190) in Abhängigkeit vom Betrieb der Vorrichtung in Schwingung versetzt wird, wobei insbesondere vorgesehen ist, dass der variable Bereich (130) zu vorgebbaren Zeiten in Schwingungen versetzt wird.

7. Verfahren zur Herstellung eines mikromechanischen Sensors, insbesondere eines Sensors nach einem der Ansprüche 1 bis 5, zur Erfassung wenigstens einer Zustandsgröße einer Substanz, wobei der Sensor wenigstens
- eine Kammer (140) zur Aufnahme der Substanz und
- einen Zugang (190), durch den ein Austausch der Substanz in der Kammer (140) ermöglicht wird,
aufweist,
**dadurch gekennzeichnet, dass** an dem wenigstens einen Zugang (190) ein starrer (180) und ein variabler (130) Bereich erzeugt wird.

8. Verfahren nach Anspruch 7, **dadurch gekennzeichnet, dass**
- der Zugang (190) als Kanal von einem Außenbereich des Sensors in die Kammer (140) ausgestaltet wird und
- der variable Bereich
- auf der der Kammer (140) abgewandten Seite des Kanals erzeugt wird, und/oder
- durch
- ein flexibles Röhrchen und/oder
- einen elastischen Rüssel (135) und/oder
- einen elastischen Federbalg
erzeugt wird, und/oder
- derart gestaltet wird, dass er schwingungsfähig ist.

9. Verfahren nach Anspruch 8, **dadurch gekennzeichnet, dass** die Schwingungen durch
- eine Anregungseinheit (120) und/oder
- eine Bewegung des Sensors
erzeugt werden,
wobei insbesondere vorgesehen ist, dass die Anregungseinheit (120)
- ein Piezoelement oder
- einen Ultraschallerzeuger
umfasst.

10. Verfahren nach Anspruch 7, **dadurch gekennzeichnet, dass** der Sensor wenigstens
- teilweise ein Halbleiterbauelement aufweist,
und/oder
- teilweise durch einen mikromechanischen Herstellungsprozess erzeugt wird,
und/oder
- wenigstens zwei Kammern aufweist,
wobei der Kammerinhalt wenigstens einer Kammer (140) ausgetauscht werden kann,
wobei insbesondere vorgesehen ist, dass
- eine der Kammern eine erste Substanz und
- die zweite Kammer eine zweite Substanz
aufweist,
und/oder.
- ein Sensorelement (110, 115) zur Erfassung der Zustandsgröße aufweist,
wobei vorgesehen ist, dass das wenigstens eine Sensorelement (110, 115) die Zustandsgröße der Substanz in der Kammer (140) erfasst,
wobei insbesondere vorgesehen ist, dass das wenigstens eine Sensorelement (110, 115) in der räumlichen Nähe der die Kammer (140) umgebenden Wand angebracht ist.
